# EUROPEAN PATENT SPECIFICATION

(11) **EP 2 581 433 B1**
(45) Date of publication and mention of the grant of the patent: **18.01.2017**
(21) Application number: 10852708.6
(22) Date of filing: 12.06.2010
(51) Int. Cl.: C09K 11/54, C09K 11/78, C09K 11/02, B82Y 30/00, C09K 11/77

(54) **YTTRIUM OXIDE FLUORESCENT POWDER AND PREPARATION METHOD THEREOF**
YTTRIUMOXID-FLUORESZENZPULVER UND HERSTELLUNGSVERFAHREN DAFÜR
POUDRE FLUORESCENTE D'OXYDE D'YTTRIUM ET SON PROCÉDÉ DE PRÉPARATION

(43) Date of publication of application: 17.04.2013
(73) Proprietor: Ocean's King Lighting Science&Technology Co., Ltd., Guangdong 518054 (CN)
(72) Inventor: ZHOU, Mingjie, Shenzhe Guangdong 518054 (CN); MA, Wenbo, Shenzhe Guangdong 518054 (CN); LV, Ting, Shenzhe Guangdong 518054 (CN); WANG, Yewen, Shenzhe Guangdong 518054 (CN)
(74) Representative: Michalski Hüttermann & Partner Patentanwälte mbB
(86) International application number: PCT/CN2010/073891
(87) International publication number: WO 2011/153715

(56) References cited:
- EP-A1- 1 279 705
- EP-A1- 2 578 661
- WO-A1-00/12649
- US-A1- 2009 009 059
- SHIGERU KATSUYAMA ET AL: "Microscopic Structure and Thermoelectric Properties of ZnO Ceramics with Various Added Elements Prepared by the Polymerized Complex Method", JOURNAL OF THE JAPAN SOCIETY OF POWDER AND POWDER METALLURGY, vol. 50, no. 11, 22 July 2003 (2003-07-22) , pages 944-947, XP055156405, ISSN: 0532-8799, DOI: 10.2497/jjspm.50.944
- KOJI AIZAWA ET AL: "Fabrication and Characterization of ZnO:Al/Sr 0.8 Bi 2.2 Ta 2 O 9 /Y 2 O 3 :Eu Structures for Ferroelectric-Electroluminescent Devices", JAPANESE JOURNAL OF APPLIED PHYSICS, vol. 48, no. 9, 1 September 2009 (2009-09-01), page 09KA11, XP055156186, ISSN: 0021-4922, DOI: 10.1143/JJAP.48.09KA11
- TAKAHASHI R. ET AL.: 'Development of a New Combinatorial Mask for Addressable Ternary Phase Diagramming: Application to Rare Earth Doped Phosphors' APPLIED SURFACE SCIENCE vol. 223, no. 1-3, 2004, pages 249 - 252, XP055069096
- ALLIERI B. ET AL.: 'Growth and Microstructural Analysis of Nanosized Y2O3 Doped with Rare-Earths' MATERIALS CHEMISTRY AND PHYSICS vol. 66, no. 2-3, 2000, pages 164 - 171, XP055069094
- LIU Z ET AL: "Preparation and optical properties of Ag enwrapped Y2O3:Eu<3+> nanoparticles in solution and in powders", SOLID STATE COMMUNICATIONS, PERGAMON, GB, vol. 137, no. 4, 1 January 2006 (2006-01-01), pages 199-202, XP027986316, ISSN: 0038-1098 [retrieved on 2006-01-01]
- MENG QING-YU ET AL: 'Luminescence intensity of Ag+ doped Y2O3:Eu nanocrystals', [Online] vol. 55, no. 5, 01 May 2006, pages 2623 - 2627, XP008179477 ISSN: 1000-3290 WULI XUEBAO - ACTA PHYSICA SINICA, ZHONGGUO WULI XUEHUI, BEIJING, CN Retrieved from the Internet: <URL:http://www.oalib.com/paper/1441108#.Vu qJJ2OwWnc> [retrieved on 2006-05-12]

## Description

### FIELD OF THE INVENTION

The present disclosure relates to the field of optoelectronics and illumination techniques, and more particularly relates to an yttrium oxide phosphor and preparation method thereof.

### BACKGROUND OF THE INVENTION

With more and more wide development and application of high-quality display illumination devices in work and life, high-efficiency phosphor has become an increasingly important application material. The traditional oxide phosphor exhibits a good stability, however, its luminous efficiency subjected to the low-voltage electron beam is not high enough.

One way to improve phosphors is for instance described in EP1 279 705 A1, wherein an oxide composite particle is disclosed composed of at least one fine gold particle contained in a matrix of an oxide particle or at least one fine gold particle supported fixedly on the surface of an oxide particle, absorbing a visible light having a specific wavelength. This phosphor has a thin film which is composed of such oxide composite particles on the surface of a phosphor particle of red or the like. The phosphor can be obtained by mixing phosphor particles into a dispersion of gold colloid/oxide composite particles, agitating the resultant mixture, and taking out the precipitated phosphor particles, followed by drying.

### SUMMARY OF THE INVENTION

Accordingly, it is necessary to provide an yttrium oxide phosphor with high luminous efficiency.

In addition, it is necessary to provide a preparation method of the yttrium oxide phosphor with high luminous efficiency.

An yttrium oxide phosphor is represented by the chemical formula: Y₂O₃:Re, M, Z₁₋ₓAlₓO;

wherein Re is at least one selected from Eu and Tb, M is at least one selected from the group consisting Ag, Au, Pt and Pd in the form of nano-particle, and 0<x≤0.05.

Preferably, the doping concentration of Re in Y₂O₃ is from 0.1% to 10%; the mole ratio of M to the sum of Re and Y is from 0.00002:1 to 0.01:1; the mole ratio of Zn₁₋ₓAlₓO to the sum of Re and Y is from 0.01:1 to 2:1.

A preparation method of an yttrium oxide phosphor comprises the following steps:
steps:
   S1, preparing a Zn₁₋ₓAlₓO colloid, wherein 0<x≤0.05;
   S2, preparing a Y, Re colloid containing metal nano-particle M or ion M; wherein Re is at least one selected from Eu and Tb, M is at least one selected from the group consisting Ag, Au, Pt and Pd; and
   S3, mixing the Zn₁₋ₓAlₓO colloid with the Y, Re colloid containing M in water bath with stirring to produce a mixture colloid, aging and heat treating the mixture colloid to obtain the yttrium oxide phosphor.

Preferably, the step S1 comprises: weighing raw materials of zinc salt and aluminum salt, respectively; dissolving with a solvent; adding stabilizing agent to prepare a mixed solution having a total mole concentration of zinc ion and aluminum ion of 0.05 to 0.70 mol/L; stirring the mixed solution in a water bath of 40°C to 70°C for 4 to 8 hours to obtain a precursor solution of Zn₁₋ₓAlₓO; placing the precursor solution of Zn₁₋ₓAlₓO in a 60°C to 90°C oven and aging for 40 to 60 hours to obtain the Zn₁₋ₓAlₓO colloid.

The zinc salt is selected from at least one of the group consisting of Zn(CH₃COO)₂·2H₂O, Zn(NO₃)₂·6H₂O, ZnCl₂·2H₂O and ZnSO₄·7H₂O; the aluminum salt is selected from at least one of the group consisting of Al(NO₃)₃·9H₂O, AlCl_{3·}6H₂O and Al₂(SO₄)₃; the solvent is selected from at least one of the group consisting of C₃H₈O₂ and aqueous ethanol solution; and the volume ratio of ethanol to deionized water of the aqueous ethanol solution is in a range of 3:1 to 7:1; the stabilizing agent is selected from at least one of the group consisting of C₂H₇NO, C₄H₁₁NO₂ and C₆H₁₅O₃N.

Preferably, the step S2 comprises: S21, weighing raw materials of Y and Re respectively according to a doping concentration of Re in Y₂O₃ of 0.1% to 10% to prepare a Y, Re solution having a sum ion concentration of 0.1mol/L to 2.00mol/L; wherein the Y, Re solution is a Y, Re aqueous solution or an aqueous ethanol solution; S22, measuring the Y, Re solution, adding ethanol, raw material of M, a complexing agent and a surfactant, successively, to prepare a Y, Re alcohol aqueous solution; wherein the ratio of water to alcohol in the Y, Re alcohol aqueous solution is from 1:1 to 9:1, the sum of mole concentration of Y and Re is 0.1 mol/L to 1.0mol/L, the mole ratio of the complexing agent to the sum of Y and Re is from 1:1 to 5:1, the concentration of the surfactant is 0.05mol/L to 0.20mol/L; wherein deionized water can be added to prepare the Y, Re alcohol aqueous solution; S23, stirring the Y, Re alcohol aqueous solution in a water bath of 40°C to 60°C for 4 to 6 hours, and placing the Y, Re alcohol aqueous solution in a 60°C to 90°C oven and aging for 56 to 90 hours to obtain the Y, Re colloid containing metal nano-particle M or ion M.

Preferably, the raw materials of Y and Re are metal oxides, hydrochloric acid salts, nitrates, or oxalates; the metal oxides are Y₂O₃, Eu₂O₃, Tb₄O₇; the hydrochloric acid salts are YCl₃·7H₂O, EuCl₃, TbCl₃·6H₂O; the nitrates are Y(NO₃)₃·6H₂O, Eu(NO₃)₃·6H₂O, Tb(NO₃)₃·6H₂O; the raw material of M is Ag, Au, Pt and Pd in the form of nano-particle; the raw material of M is aqueous or alcohol solution of AgNO₃, HAuCl₄, H₂PtCl₆, H₂PdCl₄; the complexing agent is citric acid; the surfactant is selected from at least one of the group consisting of polyethylene glycol 6000, polyethylene glycol 8000, polyethylene glycol 10000 and polyethylene glycol 20000.

Preferably, during the preparation of the Y, Re aqueous solution, if the hydrochloric acid salts or the nitrates are used as the raw materials of Y and/or Re, the raw materials of Y and/or Re are dissolved in a vessel directly; If the metal oxides or the oxalates are used as the raw materials of Y and/or Re, the metal oxides or the oxalates corresponding to the Y, Re are dissolved in a vessel with hydrochloric acid or nitric acid under a condition of 15°C to 100°C with stirring.

Preferably, in step S3, the ratio of the sum of molar amount of Zn and A1 to the sum of molar amount of Re and Y in the mixture colloid is in a range of 0.01:1 to 2:1; the temperature of water bath is 15°C to 80°C, the stirring time is 1 to 4 hours; the aging is placing the mixture colloid in a 100°C to 200°C oven for 48 to 96 hours; the heat treating is placing the mixture colloid in a crucible at 800°C to 1300 °C for 0.5 to 6 hours under an air atmosphere or a reducing atmosphere. The reducing atmosphere are powdered carbon or a mixture of nitride (N₂) and hydrogen H₂ where the proportion of hydrogen to nitrogen in the hydrogen-nitrogen atmosphere is 95:5ₒ

Preferably, when the Re in the yttrium oxide phosphor contains Terbium, the reducing atmosphere is used; when the Re contains only Europium, the air atmosphere is used.

Metal nano-particles are added into the yttrium oxide phosphor doped with a rare earth element, and since the metal nano-particles has large surface area, the internal quantum efficiency of the phosphor is improved due to the surface plasmon coupling effect, thereby improving the luminous efficiency of the phosphor.

Meanwhile, the material is oxide phosphor, which has a long work life. By changing the type and ratio of Re, the phosphor can radiate light with different wavelength. The addition of the conductive material of Zn₁₋ₓAlₓO leads to further improvement of conductivity of the phosphor, thus enhancing the emission luminance of the phosphor. The conductivity of the phosphor can be further improved by changing the amount of Zn and Al in Zn₁₋ₓAlₓO.

The preparation method is a simple, low equipment requirement, and has a short preparation period; the method is proved feasible after several practices.

### BRIEF DESCRIPTION OF THE DRAWINGS

FIG. 1 is a flowchart of an embodiment of a method for preparing an yttrium oxide phosphor;
FIG. 2 shows a spectrum of the yttrium oxide phosphor prepared according to the present invention and commercial rainbow phosphor under a cathode ray excitation.

### DETAILED DESCRIPTION

The surface plasmon (SP) is a type of a wave spreading along the interface between metal and dielectric, and the amplitude exponentially decay as the distance away from the interface increases. When the metal surface structure is changed, the nature, dispersion relation, excitation mode, and coupling effects of surface plasmon polaritons (SPPs) will change significantly. The electromagnetic fields caused by the SPPs, not only can restrain the spread of light waves in the subwavelength structure, but also can generate and manipulate the electromagnetic radiation from the light frequency to the microwave band, thus active manipulation of light propagation is achieved, and to increase the optical density of states of the luminescent materials and enhances spontaneous emission rate. In addition, by using the surface plasmon coupling effect, the internal quantum efficiency of the luminescent material can be greatly improved, thus enhancing the emission intensity of the material.

Accordingly, when preparing the phosphor, metal nano-particle and conductive material can be added, such that the emission intensity of the phosphor can be enhanced via the surface plasmon coupling effect and excellent conductivity. How to effectively integrate surface plasmon effect and excellent conductive properties in the phosphor has been an important research in the field of materials science, optoelectronics and illumination technology.

An yttrium oxide phosphor, which is conductive and integrated with SP effect, is provided. A preparation method of the yttrium oxide phosphor is provided. The phosphor colloidis prepared by sol-gel method, and conductive material and metal nano-particles is added in the phosphor colloid, thus the emission intensity of the phosphor can be enhanced.

An yttrium oxide phosphor, which includes Y₂O₃, rare earth element Re, metal nano-particle M, and Zn₁₋ₓAlₓO, is represented by the chemical formula:

Y₂O₃:Re, M, Zn₁₋ₓAlₓO;

wherein Re is at least one selected from Eu and Tb, M is at least one selected from the group consisting Ag, Au, Pt and Pd in the form of nano-particle, and 0<x≤0.05.

In a preferable embodiment, Re is doped in Y₂O₃, and the doping concentration is from 0.1% to 10%. The mole ratio of M to the sum of Re and Y is from 0.00002:1 to 0.01:1. The mole ratio of Zn₁₋ₓAlₓO to the sum of Re and Y is from 0.01:1 to 2:1. The metal nano-particles are added into the yttrium oxide phosphor doped with Re, thus improving the luminous efficiency of the phosphor, meanwhile, the material is oxide phosphor, which has a long work life. By changing the type and ratio of Re, the phosphor can radiate light with different wavelength. The addition of the conductive material of Zn₁₋ₓAlₓO leads to further improvement of conductivity of the phosphor, thus enhancing the emission luminance of the phosphor. The conductivity of the phosphor can be further improved by changing the amount of Zn and Al in Zn₁₋ₓAlₓO.

An embodiment of a preparation method of the yttrium oxide phosphor is provided with the following technical solutions:
One, selection of the experimental drugs and raw materials
   1. selection of the raw materials in preparation of Zn₁₋ₓAlₓO colloid.
      Selection of zinc salt: zinc acetate (Zn(CH₃COO)₂·2H₂O), zinc nitrate (Zn(NO₃)₂·6H₂O), zinc chloride (ZnCl₂·2H₂Oµ), zinc sulfate(ZnSO₄·7H₂O) of analytical grade;
      Selection of aluminum salt: aluminum nitrate (Al(NO₃)₃·9H₂O), aluminum chloride (AlCl₃·6H₂O), aluminum sulfate (Al₂(SO₄)₃), .etc of analytical grade;
      Selection of stabilizer: monoethanolamine (C₂H₇NO), diethanolamine (C₄H₁₁NO₂), triethanolamine (C₆H₁₅O₃N) of analytical grade;
      Selection of solvent: ethylene glycol monomethyl ether (C₃H₈O₂), ethanol solution (a ratio of ethanol to deionized water ranges from (3-7): 1) of analytical grade.
   2. selection of the experimental drugs and raw materials in preparation of Y, Re colloid containing metal nano-particle M or ion M:
      The raw materials of metal oxide are Y₂O₃, Eu₂O₃, Tb₄O₇;
      The raw materials of hydrochloric acid salts are YCl₃·7H₂O, EuCl₃, TbCl₃·6H₂O;
      The raw materials of nitrates are Y(NO₃)₃·6H₂O, Eu(NO₃)₃·6H₂O, Tb(NO₃)₃·6H₂O;
      The raw materials of oxalates are oxalates which can provide Y³⁺, Eu³⁺, and Tb³⁺;
      Analytical grade hydrochloric acid or analytical nitrate (HNO₃ : 65%∼68%, concentration:14.4∼15.2mol/L; HCl : 36∼37%, concentration: 11.7mol/L) are used to dissolve oxide and oxalates;
      The solvent is deionized water (H₂O) or mixed solution containing anhydrous ethanol (CH₃CH₂OH) and deionized water, where the ratio of ethanol to the deionized water is in a range of (1∼9):1;
      The complexing agent is analytical grade citric acid (C₆H₈O₇·H₂O);
      The surfactant is selected from at least one of the group consisting of polyethylene glycol 6000, polyethylene glycol 8000, polyethylene glycol 10000 and polyethylene glycol 20000 of analytical grade.

The raw materials of M are nano-particles of Ag, Au, Pt, Pd; or such salts can be dissolved in water or ethanol as AgNO₃, HAuCl₄, H₂PtCl₆, H₂PdCl₄.

### Two, the preparation of phosphor

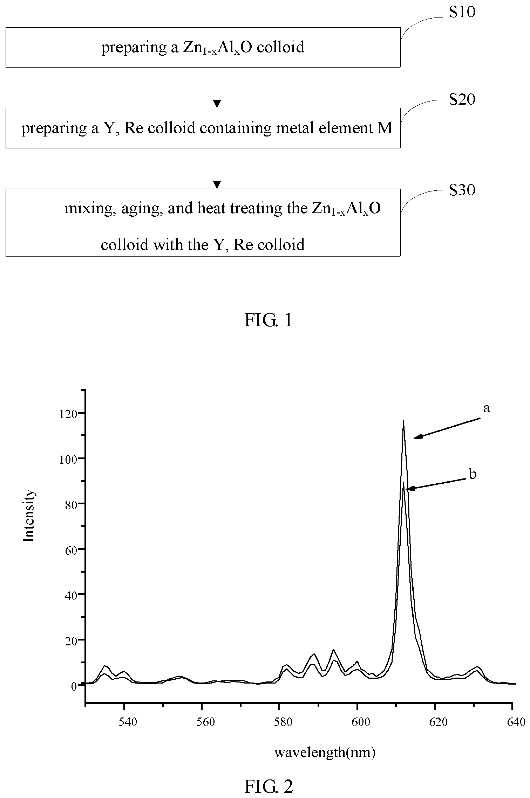

FIG. 1 illustrates a preparation method of the phosphor including the following steps:
S01, preparation of a Zn₁₋ₓAlₓO colloid.

Zinc salt and aluminum salt with a certain mass ratio are weighed respectively according to the chemical formula of Zn₁₋ₓAlₓO, where 0<x≤0.05. After the zinc salt and aluminum salt are dissolved with a solvent, stabilizing agent is added to prepare a mixed solution having a total mole concentration of zinc ion and aluminum ion of from 0.05 to 0.70 mol/L. The mixed solution is stirred in a water bath of 40°C to 70°C for 4 to 8 hours to obtain a precursor solution, and then the precursor solution is placed in a 60°C to 90°C oven and aged for 40 to 60 hours to obtain the Zn₁₋ₓAlₓO colloid.

S20, preparation of Y, Re colloid containing metal element.

Raw materials of Y and Re are weighed respectively according to a doping concentration of Re in Y₂O₃ of 0.1% to 10% to prepare a Y, Re solution having a sum ion concentration of 0.1mol/L to 2.00mol/L, where the Y, Re solution is a Y, Re aqueous solution or an aqueous ethanol solution. The Y, Re solution is measured, and ethanol, raw material of M, a complexing agent and a surfactant are added successively, to prepare a Y, Re alcohol aqueous solution, where the ratio of water to alcohol in the Y, Re alcohol aqueous solution is from 1:1 to 9:1, the sum of mole concentration of Y and Re is 0.1 mol/L to 1.0mol/L, the mole ratio of the complexing agent to the sum of Y and Re is from 1:1 to 5:1, the concentration of the surfactant is 0.05mol/L to 0.20mol/L. In a preferable embodiment, when preparing the Y, Re alcohol aqueous solution, deionized water can be added to maintain the alcohol-water ratio in the Y, Re alcohol aqueous solution. The Y, Re alcohol aqueous solution is stirred in a water bath of 40°C to 60°C for 4 to 6 hours, and placed in a 60°C to 90°C oven and aged for 56 to 90 hours to obtain the Y, Re colloid containing metal element.

When the added raw material of M is metal nano-particle, the metal element in the Y, Re colloid is in a form of nano-particle; when the added raw material of M is metal salt solution, the metal element in the Y, Re colloid is in a form of ion.

During the preparation of the Y, Re aqueous solution, if the hydrochloric acid salts or the nitrates Y(NO₃)₃·6H₂O, Eu(NO₃)₃·6H₂O, Tb(NO₃), YCl₃·7H₂O, EuCl₃, TbCl₃·6H₂O are used as the raw materials, a proper amount of drugs is weighed and dissolved in a vessel directly with deionized water. If the metal oxides or the oxalates are used as the raw materials, the metal oxides or the oxalates corresponding to the Y, Re are dissolved in a vessel with analytical grade hydrochloric acid or nitric acid under a condition of 15°C to 100°C with stirring.

S30, mixing, aging and heat treating of Zn₁₋ₓAlₓO colloid and Y, Re colloid.

The Zn₁₋ₓAlₓO colloid and the Y, Re colloid are mixed while maintaining the ratio of the sum of molar amount of Zn and A1 to the sum of molar amount of Re and Y in the mixture colloid being in a range of 0.01:1 to 2:1. The mixture is then stirred in a water bath of 15°C to 80°C for 1 to 4 hours to produce a mixture colloid. The mixture colloid is aged in a 100°C to 200°C oven for 48 to 96 hours. After drying, the mixture colloid is placed in a crucible at 800°C to 1300 °C for 0.5 to 6 hours under an air atmosphere or a carbon reducing atmosphere or a hydrogen-nitrogen reducing atmosphere to obtain the yttrium oxide phosphor, where the proportion of hydrogen to nitrogen in the hydrogen-nitrogen atmosphere is 95:5.

In the preferable embodiment, when the Re in the yttrium oxide phosphor contains Terbium, the reducing atmosphere is used; when the Re contains only Europium, the air atmosphere is used. M in ionic state is reduced to a simple substance of nano-particle state during the heat treatment operation. When the Re contains only Europium, the air atmosphere is used, however, it is found that M in ionic state is also reduced to obtain the simple substance of nano-particle state.

FIG. 2 shows a spectrum of the yttrium oxide phosphor prepared according to the present invention and commercial rainbow phosphor under a cathode ray excitation.

The spectrum is obtained using Shimadzu RF5301PC spectrometer under a 5kv voltage test conditions, where *a* represents a spectra of an Y₂O₃:Re phosphor adding Ag nano-particle and Zn₁₋ₓAlₓO prepared according to Example 1, b represents a spectra of commercial rainbow phosphor. It is calculated by Shimadzu RF5301PC spectrometer software that, the integral area of *a* is 1.49 times of the integral area of *b.*

In other words, the luminous efficiency of the Y₂O₃:Re phosphor adding Ag nano-particle and Zn₁₋ₓAlₓO prepared according to Example 1 is significantly improved compared to the commercial rainbow phosphor.

The preparation method of the yttrium oxide phosphor will further be described below mainly with reference to the specific examples.

### Example 1

2.1292g of Zn(CH₃COO)₂·2H₂O, 0.1125g of Al(NO₃)₃·9H₂O, and 0.6ml C₂H₇NO were weighed and placed in a vessel at room temperature. Glycol ether was added to make 50ml, stirred at a 60°C water bath for 4 hours to obtain a clear precursor solution of Zn₁₋ₓAlₓO. The precursor solution of Zn₁₋ₓAlₓO was placed in a 60°C oven and aged for 70 hours to form an even Zn₁₋ₓAlₓO (AZO) colloid.

37.9180g of Y(NO₃)₃·6H₂O and 0.4441g of Eu(NO₃)₃·6H₂O were weighed and dissolved in deionized water at room temperature to prepare a 100ml of Y, Eu aqueous solution of 1mol/L with a doping concentration of Eu in Y of 1%. 4ml of Y, Eu aqueous solution of 1mol/L were measured, 1ml of deionized water and 35ml of anhydrous ethanol were added as solvent, 0.4ml of AgNO₃ solution of 0.01mol/L was added, 3.0742g of citric acid and 5 g of polyethylene glycol 10000 were added, stirred in a 60°C water bath for 4 hours to obtain a clear precursor solution of Y, Eu colloid. The obtained precursor solution of Y, Eu colloid was placed in a 90°C oven and aged for 40 hours to form an even Y, Eu colloid.

1ml of resulting Zn₁₋ₓAlₓO colloid was added into the Y, Eu colloid, the mixture was stirred at 15°C for 2 hours, dried in a 100°C oven for 48 hours, insulated in an 800°C muffle furnace for 2 hours to obtain Y₂O₃:Eu phosphor doped with Ag nano-particle and Zn₁₋ₓAlₓO.

### Example 2

0.5460g of Zn(CH₃COO)₂·2H₂O, 0.0047g of Al(NO₃)₃·9H₂O, and 0.4ml C₆H₁₅O₃N were weighed and placed in a vessel at room temperature. A mixed solution containing ethanol and water with a volume ratio of 4:1 was added to make 50ml, stirred at a 40°C water bath for 5 hours to obtain a clear precursor solution of Zn1-ₓAlₓO. The precursor solution of Zn₁₋ₓAlₓO was placed in a 50°C oven and aged for 90 hours to form an even Zn₁₋ₓAlₓO colloid.

18.7675g of Y(NO₃)₃·6H₂O and 0.4461g of Eu(NO₃)₃·6H₂O were weighed and dissolved in deionized water at room temperature to prepare a 100ml of Y, Eu aqueous solution of 0.5mol/L with a doping concentration of Eu in Y of 2%. 8ml of Y, Eu aqueous solution of 0.50mol/L were measured, 32ml of anhydrous ethanol were added as solvent, 2.5ml of Ag nano-particle solution of 0.001mol/L was added, 7.6856g of citric acid and 2 g of polyethylene glycol 8000 were added, stirred in a 40°C water bath for 6 hours to obtain a clear precursor solution of Y, Eu colloid. The obtained precursor solution of Y, Eu colloid was placed in a 90°C oven and aged for 60 hours to form an even Y, Eu colloid.

0.4ml of resulting Zn₁₋ₓAlₓO colloid was added into the Y, Eu colloid, the mixture was stirred in a 50°C water bath for 2 hours, dried in a 150°C oven for 96 hours, insulated in a 1300°C muffle furnace for 0.5 hours to obtain Y₂O₃:Eu phosphor doped with Ag nano-particle and Zn₁₋ₓAlₓO.

### Example 3

3.1937g of Zn(CH₃COO)₂·2H₂O, 0.1688g of Al(NO₃)₃·9H₂O, and 0.9ml C₂H₇NO were weighed and placed in a vessel at room temperature. A methoxyethanol was added to make 50ml, stirred at a 60°C water bath for 8 hours to obtain a clear precursor solution of Zn₁₋ₓAlₓO. The precursor solution of Zn₁₋ₓAlₓO was placed in a 60°C oven and aged for 65 hours to form an even Zn₁₋ₓAlₓO (AZO) colloid.

10.7260g of Y₂O₃ and 0.8798g of Eu₂O₃ were weighed and dissolved in 27ml of hydrochloric acid at 60°C; deionized water was added to prepare a 100ml of Y, Eu aqueous solution of 1mol/L with a doping concentration of Eu in Y of 5%. 8ml of Y, Eu aqueous solution of 1.00mol/L were measured, 32ml of anhydrous ethanol were added as solvent, 1.6ml of Pt nano-particle solution of 0.001mol/L was added, 6.1485g of citric acid and 5 g of polyethylene glycol 6000 were added, stirred in a 60°C water bath for 4 hours to obtain a clear precursor solution of Y, Eu colloid. The obtained precursor solution of Y, Eu colloid was placed in a 70°C oven and aged for 60 hours to form an even Y, Eu colloid.

26ml of resulting Zn₁₋ₓAlₓO colloid was added into the Y, Eu colloid, the mixture was stirred in a 80°C water bath for 2 hours, dried in a 100°C oven for 48 hours, insulated in an 800°C muffle furnace for 2 hours to obtain Y₂O₃:Eu phosphor doped with Pt nano-particle and Zn₁₋ₓAlₓO.

### Example 4

1.0865g of Zn(CH₃COO)₂·2H₂O, 0.0188g of Al(NO₃)₃·9H₂O, and 0.4ml C₂H₇NO were weighed and placed in a vessel at room temperature. A mixed solution containing ethanol and water with a volume ratio of 5:1 was added to make 50ml, stirred at a 50°C water bath for 6 hours to obtain a clear precursor solution of Zn₁₋ₓAlₓO. The precursor solution of Zn₁₋ₓAlₓO was placed in a 60°C oven and aged for 80 hours to form an even Zn_{1-xA}lₓO colloid.

37.9180g of Y(NO₃)₃·6H₂O and 0.4441g of Eu(NO₃)₃·6H₂O were weighed and dissolved in deionized water at room temperature to prepare a 100ml of Y, Eu aqueous solution of 1mol/L with a doping concentration of Eu in Y of 1%. 20ml of Y, Eu aqueous solution of 1 mol/L were measured, 20ml of anhydrous ethanol were added as solvent, 0.4ml of Pt nano-particle solution of 0.01mol/L was added, 15.3712g of citric acid and 5 g of polyethylene glycol 10000 were added, stirred in a 60°C water bath for 4 hours to obtain a clear precursor solution of Y, Eu colloid. The obtained precursor solution of Y, Eu colloid was placed in an 80°C oven and aged for 56 hours to form an even Y, Eu colloid.

1ml of resulting Zn₁₋ₓAlₓO colloid was added into the Y, Eu colloid, the mixture was stirred in a 60°C water bath for 2 hours, dried in a 100°C oven for 48 hours, insulated in an 800°C muffle furnace for 2 hours to obtain Y₂O₃:Eu phosphor doped with Pd nano-particle and Zn₁₋ₓAlₓO.

### Example 5

2.4810g of ZnCl₂·2H₂O, 0.1448g of AlCl₃·6H₂O, and 1.5ml C₄H₁₁NO₂ were weighed and placed in a vessel at room temperature. A mixed solution containing ethanol and water with a volume ratio of 3:1 was added to make 50ml, stirred at a 70°C water bath for 8 hours to obtain a clear precursor solution of Zn₁₋ₓAlₓO. The precursor solution of Zn₁₋ₓAlₓO was placed in a 60°C oven and aged for 70 hours to form an even Zn₁₋ₓAlₓO colloid.

76.5254g of Y(NO₃)₃·6H₂O and 0.0892g of Eu(NO₃)₃·6H₂O were weighed and dissolved in deionized water to prepare a 100ml of Y, Eu aqueous solution of 2mol/L with a doping concentration of Eu of 0.1%. 20ml of Y, Eu aqueous solution of 2.00mol/L were measured, 20ml of anhydrous ethanol were added as solvent, 0.8ml of Ag nano-particle solution of 0.001mol/L was added, 7.6856g of citric acid and 8g of polyethylene glycol 10000 were added, stirred in a 50°C water bath for 6 hours to obtain a clear precursor solution of Y, Eu colloid. The obtained precursor solution of Y, Eu colloid was placed in a 60°C oven and aged for 60 hours to form an even Y, Eu colloid.

6.7ml of resulting Zn₁₋ₓAlₓO colloid was added into the Y, Eu colloid, the mixture was stirred in a 80°C water bath for 4 hours, dried in a 200°C oven for 50 hours, insulated in a 1000°C muffle furnace for 3 hours to obtain Y₂O₃:Eu phosphor doped with Ag nano-particle and Zn₁₋ₓAlₓO.

### Example 6

1.0865g of Zn(CH₃COO)₂·2H₂O, 0.0188g of Al(NO₃)₃·9H₂O, and 0.4ml C₂H₇NO were weighed and placed in a vessel at room temperature. A mixed solution containing ethanol and water with a volume ratio of 5:1 was added to make 50ml, stirred at a 50°C water bath for 6 hours to obtain a clear precursor solution of Zn₁₋ₓAlₓO. The precursor solution of Zn₁₋ₓAlₓO was placed in a 70°C oven and aged for 80 hours to form an even Zn₁₋ₓAlₓO colloid.

37.9180g of Y(NO₃)₃·6H₂O and 0.4441g of Eu(NO₃)₃·6H₂O were weighed and dissolved in deionized water at room temperature to prepare a 100ml of Y, Eu aqueous solution of 1mol/L with a doping concentration of Eu in Y of 1%. 20ml of Y, Eu aqueous solution of 1.00mol/L were measured, 20ml of anhydrous ethanol were added as solvent, 2ml of H₂PdCl₄ solution of 0.1mol/L was added, 15.3712g of citric acid and 5 g of polyethylene glycol 20000 were added, stirred in a 60°C water bath for 4 hours to obtain a clear precursor solution of Y, Eu colloid. The obtained precursor solution of Y, Eu colloid was placed in an 80°C oven and aged for 56 hours to form an even Y, Eu colloid.

1ml of resulting Zn₁₋ₓAlₓO colloid was added into the Y, Eu colloid, the mixture was stirred in a 60°C water bath for 2 hours, dried in a 100°C oven for 96 hours, insulated in an 800°C muffle furnace for 6 hours to obtain Y₂O₃:Eu phosphor doped with Pd nano-particle and Zn₁₋ₓAlₓO.

### Example 7

4.2583g of Zn(CH₃COO)₂·2H₂O, 0.2251g of Al(NO₃)₃·9H₂O, and 2ml C₄H₁₁NO₂ were weighed and placed in a vessel at room temperature. A methoxyethanol was added to make 50ml, was added to make 50ml, stirred at a 60°C water bath for 4 hours to obtain a clear precursor solution of Zn₁₋ₓAlₓO. The precursor solution of Zn₁₋ₓAlₓO was placed in a 60°C oven and aged for 78 hours to form an even Zn₁₋ₓAlₓO colloid.

37.5350g of Y(NO₃)₃·6H₂O and 0.9061g of Tb(NO₃)_{3·}6H₂O were weighed and dissolved in deionized water at room temperature to prepare a 100ml of Y, Tb aqueous solution of 1mol/L with a doping concentration of Tb in Y of 2%. 12ml of Y, Tb aqueous solution of 1.00mol/L were measured, 28ml of anhydrous ethanol were added as solvent, 0.6ml of Au nano-particle solution of 0.001mol/L was added, 9.2227g of citric acid and 5 g of polyethylene glycol 10000 were added, stirred in a 60°C water bath for 4 hours to obtain a clear precursor solution of Y, Tb colloid. The obtained precursor solution of Y, Tb colloid was placed in a 90°C oven and aged for 56 hours to form an even Y, Tb colloid.

15ml of resulting Zn₁₋ₓAlₓO colloid was added into the Y, Tb colloid, the mixture was stirred in a 60°C water bath for 2 hours, dried in a 100°C oven for 96 hours, insulated in a 1000°C muffle furnace for 2 hours in a carbon reducing atmosphere to obtain Y₂O₃:Tb phosphor doped with Au nano-particle and Zn₁₋ₓAlₓO.

### Example 8

7.2984g of Zn(CH₃COO)₂·2H₂O, 0.6565g of Al(NO₃)₃·9H₂O, and 6ml C₂H₇NO were weighed and placed in a vessel at room temperature. A mixed solution containing ethanol and water with a volume ratio of 6:1 was added to make 50ml, stirred at a 70°C water bath for 5 hours to obtain a clear precursor solution of Zn₁₋ₓAlₓO. The precursor solution of Zn₁₋ₓAlₓO was placed in a 60°C oven and aged for 85 hours to form an even Zn₁₋ₓAlₓO colloid.

31.1728g of YCl₃ and 1.1198g of TbCl₃·6H₂O were weighed and dissolved in deionized water at room temperature to prepare a 100ml of Y, Tb aqueous solution of 1mol/L with a doping concentration of Eu in Y of 3%. 4ml ofY, Tb aqueous solution of 1.00mol/L were measured, 36ml of anhydrous ethanol were added as solvent, 0.4ml of H₂PtCl₆ solution of 0.1mol/L was added, 6.2125g of citric acid and 5 g of polyethylene glycol 10000 were added, stirred in a 60°C water bath for 5 hours to obtain a clear precursor solution of Y, Tb colloid. The obtained precursor solution of Y, Tb colloid was placed in a 60°C oven and aged for 60 hours to form an even Y, Tb colloid.

4ml of resulting Zn₁₋ₓAlₓO colloid was added into the Y, Tb colloid, the mixture was stirred in a 70°C water bath for 4 hours, dried in a 180°C oven for 60 hours, insulated in a 1000°C muffle furnace under a hydrogen-nitrogen reducing atmosphere for 3 hours to obtain Y₂O₃:Tb phosphor doped with Pt nano-particle and Zn₁₋ₓAlₓO.

### Example 9

2.9452g of Zn(NO₃)₂·6H₂O, 0.0241g of AlCl₃·6H₂O, and 0.6ml C₂H₇NO were weighed and placed in a vessel at room temperature. A methoxyethanol was added to make 50ml, stirred at a 60°C water bath for 7 hours to obtain a clear precursor solution of Zn₁₋ₓAlₓO. The precursor solution of Zn₁₋ₓAlₓO was placed in a 60°C oven and aged for 56 hours to form an even Zn₁₋ₓAlₓO colloid.

28.6899g of oxalate yttrium and 1.7201g of oxalic acid europium were weighed and dissolved in 20 ml of nitrate at 15°C with stirring; deionized water was added to prepare a 100ml of Y, Eu aqueous solution of 1mol/L with a doping concentration of Eu of 5%. 20ml of Y, Eu aqueous solution of 1.00mol/L were measured, 20ml of anhydrous ethanol were added as solvent, 0.2ml of HAuCl₄ solution of 0.1mol/L was added, 7.6856g of citric acid and 5g of polyethylene glycol 10000 were added, stirred in a 60°C water bath for 4 hours to obtain a clear precursor solution of Y, Eu colloid. The obtained precursor solution ofY, Eu colloid was placed in a 60°C oven and aged for 60 hours to form an even Y, Eu colloid.

5ml of resulting Zn₁₋ₓAlₓO colloid was added into the Y, Eu colloid, the mixture was stirred in an 80°C water bath for 2 hours, dried in a 100°C oven for 56 hours, insulated in an 800°C muffle furnace for 2 hours to obtain Y₂O₃:Eu phosphor doped with Au nano-particle and Zn₁₋ₓAlₓO.

### Example 10

9.6620g of ZnSO₄·7H₂O, 0.2395g of Al₂(SO₄)₃, and 4.7ml C₆H₁₅O₃N were weighed and placed in a vessel at room temperature. A methoxyethanol was added to make 50ml, stirred at a 60°C water bath for 5 hours to obtain a clear precursor solution of Zn₁₋ₓAlₓO. The precursor solution of Zn₁₋ₓAlₓO was placed in a 60°C oven and aged for 60 hours to form an even Zn₁₋ₓAlₓO colloid.

11.0647g of Y₂O₃ and 0.3739g of Tb₄O₇ were weighed and dissolved in 27 ml of hydrochloric acid at 100°C with stirring; deionized water was added to prepare a 100ml of Y, Tb aqueous solution of 1mol/L with a doping concentration of Tb of 2%. 15ml of Y, Tb aqueous solution of 1.00mol/L were measured, 25ml of anhydrous ethanol were added as solvent, 0.75ml of HAuCl₄ solution of 0.01mol/L was added, 5.7642g of citric acid and 5g of polyethylene glycol 10000 were added, stirred in a 50°C water bath for 5 hours to obtain a clear precursor solution of Y, Tb colloid. The obtained precursor solution of Y, Tb colloid was placed in a 90°C oven and aged for 60 hours to form an even Y, Tb colloid.

10ml of resulting Zn₁₋ₓAlₓO colloid was added into the Y, Tb colloid, the mixture was stirred in a 60°C water bath for 2 hours, dried in a 130°C oven for 59 hours, insulated in a 1100°C muffle furnace under a hydrogen-nitrogen reducing atmosphere for 2 hours to obtain Y₂O₃:Tb phosphor doped with Au nano-particle and Zn₁₋ₓAlₓO.

### Example 11

2.1292g of Zn(CH₃COO)₂·2H₂O, 0.1125g of Al(NO₃)₃·9H₂O, and 0.6ml C₂H₇NO were weighed and placed in a vessel at room temperature. A methoxyethanol was added to make 50ml, was added to make 50ml, stirred at a 60°C water bath for 4 hours to obtain a clear precursor solution of Zn₁₋ₓAlₓO. The precursor solution of Zn₁₋ₓAlₓO was placed in a 60°C oven and aged for 70 hours to form an even Zn₁₋ₓAlₓO colloid.

37.9180g of Y(NO₃)₃·6H₂O and 0.4441g of Eu(NO₃)_{3·}6H₂O were weighed and dissolved in deionized water at room temperature to prepare a 100ml of Y, Eu aqueous solution of 1mol/L with a doping concentration of Tb in Y of 1 %. 4ml of Y, Eu aqueous solution of 1.00mol/L were measured, 1 ml of deionized water and 35ml of anhydrous ethanol were added as solvent, 2.0ml of Pd nano-particle solution of 0.01mol/L was added, 3.0742g of citric acid and 5 g of polyethylene glycol 10000 were added, stirred in a 60°C water bath for 4 hours to obtain a clear precursor solution of Y, Eu colloid. The obtained precursor solution ofY, Eu colloid was placed in a 90°C oven and aged for 40 hours to form an even Y, Eu colloid.

1ml of resulting Zn₁₋ₓAlₓO colloid was added into the Y, Eu colloid, the mixture was stirred in a 60°C water bath for 2 hours, dried in a 130°C oven for 59 hours, insulated in a 1100°C muffle furnace for 2 hours in a carbon reducing atmosphere to obtain Y₂O₃:Eu phosphor doped with Pd nano-particle and Zn₁₋ₓAlₓO.

### Example 12

6.9733g of ZnSO₄·7H₂O, 0.1283g of Al₂(SO₄)₃, and 1.5ml C₂H₇NO were weighed and placed in a vessel at room temperature. A mixed solution containing ethanol and water with a volume ratio of 7:1 was added to make 50ml, stirred at a 60°C water bath for 5 hours to obtain a clear precursor solution of Zn₁₋ₓAlₓO. The precursor solution of Zn₁₋ₓAlₓO was placed in a 60°C oven and aged for 90 hours to form an even Zn₁₋ₓAlₓO colloid.

27.1780g of oxalic yttrium, and 3.5099g of oxalic acid terbium were weighed and dissolved in 20 ml of nitrate at 15°C with stirring; deionized water was added to prepare a 100ml of Y, Tb aqueous solution of 1mol/L with a doping concentration of Tb of 10%. 10ml of Y, Tb aqueous solution of 1.00mol/L were measured, 30ml of anhydrous ethanol were added as solvent, 0.8ml of AgNO₃ solution of 0. 1mol/L was added, 7.6858g of citric acid and 5g of polyethylene glycol 10000 were added, stirred in a 60°C water bath for 4 hours to obtain a clear precursor solution of Y, Tb colloid. The obtained precursor solution of Y, Tb colloid was placed in an 80°C oven and aged for 50 hours to form an even Y, Tb colloid.

10ml of resulting Zn₁₋ₓAlₓO colloid was added into the Y, Tb colloid, the mixture was stirred in a 60°C water bath for 2 hours, dried in a 100°C oven for 53 hours, insulated in a 1300°C muffle furnace under a hydrogen-nitrogen reducing atmosphere for 2 hours to obtain Y₂O₃:Tb phosphor doped with Ag nano-particle and Zn₁₋ₓAlₓO.

### Example 13

2.4810g of ZnCl₂·2H₂O, 0.1448g of AlCl₃·6H₂O, and 1.5ml C₄H₁₁NO₂ were weighed and placed in a vessel at room temperature. A mixed solution containing ethanol and water with a volume ratio of 3:1 was added to make 50ml, stirred at a 70°C water bath for 8 hours to obtain a clear precursor solution of Zn₁₋ₓAlₓO. The precursor solution of Zn₁₋ₓAlₓO was placed in a 60°C oven and aged for 70 hours to form an even Zn₁₋ₓAlₓO colloid.

76.5254g of Y(NO₃)₃·6H₂O and 0.0892g of Eu(NO₃)₃·6H₂O were weighed and dissolved in deionized water to prepare a 100ml of Y, Eu aqueous solution of 2mo1/L with a doping concentration of Eu of 0.1%. 20ml of Y, Eu aqueous solution of 2.00mol/L were measured, 20ml of anhydrous ethanol were added as solvent, 2.0ml of Pd nano-particle solution of 0.01mol/L was added, 7.6856g of citric acid and 8g of polyethylene glycol 10000 were added, stirred in a 50°C water bath for 6 hours to obtain a clear precursor solution of Y, Eu colloid. The obtained precursor solution of Y, Eu colloid was placed in a 60°C oven and aged for 60 hours to form an even Y, Eu colloid.

6.7ml of resulting Zn₁₋ₓAlₓO colloid was added into the Y, Eu colloid, the mixture was stirred in a 60°C water bath for 2 hours, dried in a 130°C oven for 59 hours, insulated in a 1200°C muffle furnace for 2 hours to obtain Y₂O₃:Eu phosphor doped with Pd nano-particle and Zn₁₋ₓAlₓO.

### Example 14

0.5460g of Zn(CH₃COO)₂·2H₂O, 0.0047g of AlNO₃)_{3·}9H₂O, and 0.4ml C₆H₁₅O₃N were weighed and placed in a vessel at room temperature. A mixed solution containing ethanol and water with a volume ratio of 4:1 was added to make 50ml, stirred at a 40°C water bath for 5 hours to obtain a clear precursor solution of Zn₁₋ₓAlₓO. The precursor solution of Zn₁₋ₓAlₓO was placed in a 60°C oven and aged for 90 hours to form an even Zn₁₋ₓAlₓO colloid.

18.7675g of Y(NO₃)₃·6H₂O and 0.4461g of Eu(NO₃)₃·6H₂O were weighed and dissolved in deionized water at room temperature to prepare a 100ml of Y, Eu aqueous solution of 0.5mol/L with a doping concentration of Eu in Y of 2%. 8ml of Y, Eu aqueous solution of 0.50mol/L were measured, 32ml of anhydrous ethanol were added as solvent, 0.8ml of HAuCl₄ solution of 0.01mol/L was added, 7.6856g of citric acid and 2 g of polyethylene glycol 10000 were added, stirred in a 40°C water bath for 6 hours to obtain a clear precursor solution of Y, Eu colloid. The obtained precursor solution of Y, Eu colloid was placed in a 90°C oven and aged for 60 hours to form an even Y, Eu colloid.

0.4ml of resulting Zn₁₋ₓAlₓO colloid was added into the Y, Eu colloid, the mixture was stirred in a 60°C water bath for 2 hours, dried in a 130°C oven for 59 hours, insulated in an 1200°C muffle furnace for 2 hours to obtain Y₂O₃:Eu phosphor doped with Au nano-particle and Zn₁₋ₓAlₓO.

### Example 15

3.1937g of Zn(CH₃COO)₂·2H₂O, 0.1688g of Al(NO₃)₃·9H₂O, and 0.9ml C₂H₇NO were weighed and placed in a vessel at room temperature. A methoxyethanol was added to make 50ml, stirred at a 60°C water bath for 8 hours to obtain a clear precursor solution of Zn1-xAlxO. The precursor solution of Zn₁₋ₓAlₓO was placed in a 60°C oven and aged for 65 hours to form an even Zn₁₋ₓAlₓO (AZO) colloid.

10.7260g of Y₂O₃ and 0.8798g of Eu₂O₃ were weighed and dissolved in 27ml of hydrochloric acid at 60°C with stirring, deionized water was added to prepare a 100ml of Y, Eu aqueous solution of 1mol/L with a doping concentration of Eu in Y of 5%. 8ml of Y, Eu aqueous solution of 1.00mol/L were measured, 32ml of anhydrous ethanol were added as solvent, 1.6ml of Au nano-particle solution of 0.001mol/L was added, 6.1485g of citric acid and 5 g of polyethylene glycol 6000 were added, stirred in a 60°C water bath for 4 hours to obtain a clear precursor solution of Y, Eu colloid. The obtained precursor solution of Y, Eu colloid was placed in a 70°C oven and aged for 60 hours to form an even Y, Eu colloid.

26ml of resulting Zn₁₋ₓAlₓO colloid was added into the Y, Eu colloid, the mixture was stirred in a 75°C water bath for 2 hours, dried in a 100°C oven for 48 hours, insulated in an 800°C muffle furnace for 2 hours to obtain Y₂O₃:Eu phosphor doped with Au nano-particle and Zn₁₋ₓAlₓO.

### Example 16

2.9452g of Zn(NO₃)₂·₆H₂O, 0.0241g of AlCl₃·6H₂O, and 0.6ml C₂H₇NO were weighed and placed in a vessel at room temperature. A methoxyethanol was added to make 50ml, stirred at a 60°C water bath for 7 hours to obtain a clear precursor solution of Zn₁₋ₓAlₓO. The precursor solution of Zn₁₋ₓAlₓO was placed in a 60°C oven and aged for 56 hours to form an even Zn₁₋ₓAlₓO colloid.

28.6899g of oxalate yttrium and 1.7201g of oxalic acid europium were weighed and dissolved in 20 ml of nitrate; deionized water was added to prepare a 100ml of Y, Eu aqueous solution of 1mol/L with a doping concentration of Eu of 5%. 20ml of Y, Eu aqueous solution of 1.00mol/L were measured, 20ml of anhydrous ethanol were added as solvent, 0.4ml of AgNO₃ solution of 0.1mol/L was added, 7.6858g of citric acid and 5g of polyethylene glycol 10000 were added, stirred in a 60°C water bath for 4 hours to obtain a clear precursor solution of Y, Eu colloid. The obtained precursor solution of Y, Eu colloid was placed in a 60°C oven and aged for 60 hours to form an even Y, Eu colloid.

5ml of resulting Zn₁₋ₓAlₓO colloid was added into the Y, Eu colloid, the mixture was stirred in a 65°C water bath for 2 hours, dried in a 100°C oven for 48 hours, insulated in a 900°C muffle furnace for 2 hours to obtain Y₂O₃:Eu phosphor doped with Ag nano-particle and Zn₁₋ₓAlₓO.

### Example 17

4.2583g of Zn(CH₃COO)₂·2H₂O, 0.2251g of Al(NO₃)₃·9H₂O, and 2ml C₄H₁₁NO₂ were weighed and placed in a vessel at room temperature. A methoxyethanol was added to make 50ml, was added to make 50ml, stirred at a 60°C water bath for 4 hours to obtain a clear precursor solution of Zn₁₋ₓAlₓO. The precursor solution of Zn₁₋ₓAlₓO was placed in a 60°C oven and aged for 78 hours to form an even Zn₁₋ₓAlₓO colloid.

37.5350g of Y(NO₃)₃·6H₂O and 0.9061g of Tb(NO₃)₃·6H₂O were weighed and dissolved in deionized water at room temperature to prepare a 100ml of Y, Tb aqueous solution of 1mol/L with a doping concentration of Tb in Y of 2%. 12ml of Y, Tb aqueous solution of 1.00mol/L were measured, 28ml of anhydrous ethanol were added as solvent, 0.24ml of Pt nano-particle solution of 0.001mol/L was added, 9.2227g of citric acid and 5 g of polyethylene glycol 10000 were added, stirred in a 60°C water bath for 4 hours to obtain a clear precursor solution of Y, Tb colloid. The obtained precursor solution of Y, Tb colloid was placed in a 90°C oven and aged for 56 hours to form an even Y, Tb colloid.

15ml of resulting Zn₁₋ₓAlₓO colloid was added into the Y, Tb colloid, the mixture was stirred in a 55°C water bath for 2.5 hours, dried in a 150°C oven for 90 hours, insulated in a 1300°C muffle furnace for 0.5 hour in a carbon reducing atmosphere to obtain Y₂O₃:Tb phosphor doped with Pt nano-particle and Zn₁₋ₓAlₓO.

### Example 18

6.9733g of ZnSO₄·7H₂O, 0.1283g of Al₂(SO₄)₃, and 1.5ml C₂H₇NO were weighed and placed in a vessel at room temperature. A mixed solution containing ethanol and water with a volume ratio of 7:1 was added to make 50ml, stirred at a 60°C water bath for 5 hours to obtain a clear precursor solution of Zn₁₋ₓAlₓO. The precursor solution of Zn₁₋ₓAlₓO was placed in a 60°C oven and aged for 90 hours to form an even Zn₁₋ₓAlₓO colloid.

27.1780g of oxalic yttrium and 3.5099g of oxalic acid terbium were weighed and dissolved in 20 ml of nitrate at 15°C with stirring; deionized water was added to prepare a 100ml of Y, Tb aqueous solution of 1mol/L with a doping concentration of Tb of 10%. 10ml of Y, Tb aqueous solution of 1.00mol/L were measured, 30ml of anhydrous ethanol were added as solvent, 0.1ml of H₂PdCl₄ solution of 0.1mol/L was added, 7.6858g of citric acid and 5g of polyethylene glycol 6000 were added, stirred in a 60°C water bath for 4 hours to obtain a clear precursor solution of Y, Tb colloid. The obtained precursor solution of Y, Tb colloid was placed in an 80°C oven and aged for 50 hours to form an even Y, Tb colloid.

10ml of resulting Zn₁₋ₓAlₓO colloid was added into the Y, Tb colloid, the mixture was stirred in a 80°C water bath for 1 hour, dried in a 170°C oven for 96 hours, insulated in a 800°C muffle furnace under a carbon reducing atmosphere for 0.5 hour to obtain Y₂O₃:Tb phosphor doped with Pd nano-particle and Zn₁₋ₓAlₓO.

### Example 19

9.6620g of ZnSO₄·7H₂O, 0.2395g of Al₂(SO₄)₃, and 4.7ml C₆H₁₅O₃N were weighed and placed in a vessel at room temperature. A methoxyethanol was added to make 50ml, stirred at a 60°C water bath for 5 hours to obtain a clear precursor solution of Zn₁₋ₓAlₓO. The precursor solution of Zn₁₋ₓAlₓO was placed in a 60°C oven and aged for 60 hours to form an even Zn₁₋ₓAlₓO colloid.

11.0647g of Y₂O₃ and 0.3739g of Tb₄O₇ were weighed and dissolved in 27 ml of hydrochloric acid at 100°C with stirring; deionized water was added to prepare a 100ml of Y, Tb aqueous solution of 1mol/L with a doping concentration of Tb of 2%. 15ml of Y, Tb aqueous solution of 1.00mol/L were measured, 25ml of anhydrous ethanol were added as solvent, 3.0ml of Ag nano-particle solution of 0.001mol/L was added, 5.7642g of citric acid and 5g of polyethylene glycol 10000 were added, stirred in a 50°C water bath for 5 hours to obtain a clear precursor solution of Y, Tb colloid. The obtained precursor solution of Y, Tb colloid was placed in a 90°C oven and aged for 60 hours to form an even Y, Tb colloid.

10ml of resulting Zn₁₋ₓAlₓO colloid was added into the Y, Tb colloid, the mixture was stirred in a 50°C water bath for 2 hours, dried in a 180°C oven for 85 hours, insulated in a 1300°C muffle furnace under a carbon reducing atmosphere for 0.5 hour to obtain Y₂O₃:Tb phosphor doped with Ag nano-particle and Zn₁₋ₓAlₓO.

### Example 20

7.2984g of Zn(CH₃COO)₂·2H₂O, 0.6565g of Al(NO₃)₃·9H₂O, and 6ml C₂H₇NO were weighed and placed in a vessel at room temperature. A mixed solution containing ethanol and water with a volume ratio of 6:1 was added to make 50ml, stirred at a 70°C water bath for 5 hours to obtain a clear precursor solution of Zn₁₋ₓAlₓO. The precursor solution of Zn₁₋ₓAlₓO was placed in a 60°C oven and aged for 85 hours to form an even Zn₁₋ₓAlₓO colloid.

31.1728g of YCl₃ and 1.1198g of TbCl₃·6H₂O were weighed and dissolved in deionized water at room temperature to prepare a 100ml of Y, Tb aqueous solution of 1mol/L with a doping concentration of Eu in Y of 3%. 4ml ofY, Tb aqueous solution of 1.00mol/L were measured, 36ml of anhydrous ethanol were added as solvent, 2.0ml of Pt nano-particle solution of 0.001mol/L was added, 6.2125g of citric acid and 5 g of polyethylene glycol 10000 were added, stirred in a 60°C water bath for 5 hours to obtain a clear precursor solution of Y, Tb colloid. The obtained precursor solution of Y, Tb colloid was placed in a 60°C oven and aged for 60 hours to form an even Y, Tb colloid.

4ml of resulting Zn₁₋ₓAlₓO colloid was added into the Y, Tb colloid, the mixture was stirred in a 75°C water bath for 3.5 hours, dried in a 160°C oven for 96 hours, insulated in a 1300°C muffle furnace under a carbon reducing atmosphere for 6 hours to obtain Y₂O₃:Tb phosphor doped with Pt nano-particle and Zn₁₋ₓAlₓO.

## Claims

1. An yttrium oxide phosphor consisting of:
a Y₂O₃:Re phosphor doped with M nano-particle and Zn₁₋ₓAlₓO;
wherein Re is at least one selected from Eu and Tb, M is at least one selected from the group consisting Ag, Au, Pt and Pd in the form of nano-particle, and 0<x≤0.05.

2. The yttrium oxide phosphor according to claim 1, wherein the doping concentration of Re in Y₂O₃ is from 0.1% to 10%;
the mole ratio of M to the sum of Re and Y is from 0.00002:1 to 0.01:1;
the mole ratio of Zn₁₋ₓAlₓO to the sum of Re and Y is from 0.01:1 to 2:1.

3. A preparation method of a metal nano-particle added, rare earth element doped yttrium oxide phosphor, comprising the following steps:
S1, preparing a Zn₁₋ₓAlₓO colloid, wherein 0<x≤0.05;
S2, preparing a Y, Re colloid containing metal nano-particle M or ion M, wherein Re is at least one selected from Eu and Tb, M is at least one selected from the group consisting Ag, Au, Pt and Pd; and
S3, mixing the Zn₁₋ₓAlₓO colloid with the Y, Re colloid containing M in water bath with stirring to produce a mixture colloid, aging and heat treating the mixture colloid to obtain the yttrium oxide phosphor.

4. The preparation method of the yttrium oxide phosphor according to claim 3, wherein the step S1 comprises: weighing raw materials of zinc salt and aluminum salt, respectively; dissolving with a solvent; adding stabilizing agent to prepare a mixed solution having a total mole concentration of zinc ion and aluminum ion of 0.05 to 0.70 mol/L; stirring the mixed solution in a water bath of 40°C to 70°C for 4 to 8 hours to obtain a precursor solution of Zn₁₋ₓAlₓO; placing the precursor solution of Zn₁₋ₓAlₓO in a 50°C to 70°C oven and aging for 56 to 90 hours to obtain the Zn₁₋ₓAlₓO colloid.

5. The preparation method of the yttrium oxide phosphor according to claim 4, wherein the zinc salt is selected from at least one of the group consisting of Zn(CH₃COO)₂·₂H₂O, Zn(NO₃)₂·6H₂O, ZnCl₂·2H₂O and ZnSO₄·7H₂O;
the aluminum salt is selected from at least one of the group consisting of Al(NO₃)₃·9H₂O, AlCl₃·6H₂O and Al₂(SO₄)₃;
the solvent is selected from at least one of the group consisting of C₃H₈O₂ and aqueous ethanol solution; and the volume ratio of ethanol to deionized water of the aqueous ethanol solution is in a range of 3:1 to 7:1; and
the stabilizing agent is selected from at least one of the group consisting of C₂H₇NO, C₄H₁₁NO₂ and C₆H₁₅O₃N.

6. The preparation method of the yttrium oxide phosphor according to claim 3, wherein the step S2 comprises:
S21, weighing raw materials of Y and Re respectively according to a doping concentration of Re in Y₂O₃ of 0.1 % to 10% to prepare a Y, Re solution having a sum ion concentration of 0.1mol/L to 2.00mol/L; wherein the Y, Re solution is a Y, Re aqueous solution or an aqueous ethanol solution;
S22, measuring the Y, Re solution, adding ethanol, raw material of M, a complexing agent and a surfactant, successively, to prepare a Y, Re alcohol aqueous solution; wherein the ratio of water to alcohol in the Y, Re alcohol aqueous solution is from 1:1 to 9:1, the sum of mole concentration of Y and Re is 0.1 mol/L to 1.0mol/L, the mole ratio of the complexing agent to the sum of Y and Re is from 1:1 to 5:1, the concentration of the surfactant is 0.05mol/L to 0.20mol/L; wherein deionized water can be added to prepare the Y, Re alcohol aqueous solution; and
S23, stirring the Y, Re alcohol aqueous solution in a water bath of 40°C to 60°C for 4 to 6 hours, and placing the Y, Re alcohol aqueous solution in a 60°C to 90°C oven and aging for 40 to 60 hours to obtain the Y, Re colloid containing metal nano-particle M or ion M.

7. The preparation method of the yttrium oxide phosphor according to claim 6, wherein the raw materials of Y and Re are metal oxides, hydrochloric acid salts, nitrates, or oxalates;
the raw material of M is Ag, Au, Pt and Pd in the form of nano-particle;
the raw material of M is aqueous or alcohol solution of AgNO₃, HAuCl₄, H₂PtCl₆, H₂PdCl₄;
the complexing agent is citric acid; and
the surfactant is selected from at least one of the group consisting of polyethylene glycol 6000, polyethylene glycol 8000, polyethylene glycol 10000 and polyethylene glycol 20000.

8. The preparation method of the yttrium oxide phosphor according to claim 7, wherein the metal oxides are Y₂O₃, Eu₂O₃, Tb₄O₇;
the hydrochloric acid salts are YCl₃·7H₂O, EuCl₃, TbCl₃·6H₂O;
the nitrates are Y(NO₃)₃·6H₂O, Eu(NO₃)₃·6H₂O, Tb(NO₃)₃·6H₂O.

9. The preparation method of the yttrium oxide phosphor according to claim 7, wherein during the preparation of the Y, Re aqueous solution, if the hydrochloric acid salts or the nitrates are used as the raw materials of Y and/or Re, the raw materials of Y and/or Re are dissolved in a vessel directly;
If the metal oxides or the oxalates are used as the raw materials of Y and/or Re, the metal oxides or the oxalates corresponding to the Y, Re are dissolved in a vessel with hydrochloric acid or nitric acid under a condition of 15°C to 100°C with stirring.

10. The preparation method of the yttrium oxide phosphor according to claim 3, wherein in step S3, the ratio of the sum of molar amount of Zn and A1 to the sum of molar amount of Re and Y in the mixture colloid is in a range of 0.01:1 to 2:1;
the temperature of water bath is 15°C to 80°C, the stirring time is 1 to 4 hours;
the aging is placing the mixture colloid in a 100°C to 200°C oven for 48 to 96 hours; and the heat treating is placing the mixture colloid in a crucible at 800°C to 1300 °C for 0.5 to 6 hours under an air atmosphere or a reducing atmosphere.

## Patentansprüche

1. Yttriumoxid-Leuchtstoff, bestehend aus:
einem Y₂O₃:Re-Leuchtstoff, der mit M-Nanopartikeln und Zn₁₋ₓAlₓO dotiert ist,
wobei Re mindestens ein aus Eu und Tb ausgewähltes Element ist, M mindestens ein aus der Gruppe bestehend aus Ag, Au, Pt und Pd ausgewähltes Element in der Form von Nanopartikeln ist, und 0 < x ≤ 0,05 ist.

2. Yttriumoxid-Leuchtstoff nach Anspruch 1, wobei
die Dotierungskonzentration von Re in Y₂O₃ im Bereich von 0,1 % bis 10 % liegt,
das Molverhältnis von M zur Summe aus Re und Y im Bereich von 0,00002:1 bis 0,01:1 liegt, und
das Molverhältnis von Zn₁₋ₓAlₓO zur Summe aus Re und Y im Bereich von 0,01:1 bis 2:1 liegt.

3. Verfahren zum Herstellen eines mit einem Seltenerdelement dotierten Yttriumoxid-Leuchtstoffs mit beigemischten Metall-Nanopartikeln, mit den Schritten:
S1: Herstellen eines Zn₁₋ₓAlₓO-Kolloids, wobei 0 < x ≤ 0,05 ist;
S2: Herstellen eines Y,Re-Kolloids, das M-Metall-Nanopartikel oder Ionen M enthält, wobei Re mindestens ein aus Eu und Tb ausgewähltes Element ist und M mindestens ein aus der Gruppe bestehend aus Ag, Au, Pt und Pd ausgewähltes Element ist; und
S3: Mischen des Zn₁₋ₓAlₓO-Kolloids mit dem M enthaltenden Y,Re-Kolloid unter Rühren in einem Wasserbad, um ein Mischkolloid herzustellen, und Alterungs- und Wärmebehandeln des Mischkolloids, um den Yttriumoxid-Leuchtstoff zu erhalten.

4. Das Herstellverfahren des Yttriumoxid-Leuchtstoffs nach Anspruch 3, wobei Schritt S1 aufweist: Abwiegen von Rohmaterialien von Zinksalz und Aluminiumsalz, Lösen mit einem Lösungsmittel, Hinzugeben eines Stabilisierungsmittels zum Herstellen einer Mischlösung mit einer Gesamt-Molkonzentration von Zinkionen und Aluminiumionen von 0,05 bis 0,70 Mol/I, Rühren der Mischlösung für 4 bis 8 Stunden in einem Wasserbad von 40°C bis 70°C, um eine Vorläuferlösung von Zn₁₋ₓAlₓO zu erhalten, Platzieren der Vorläuferlösung von Zn₁₋ₓAlₓO in einem Ofen bei 50°C bis 70°C und Altern für 56 bis 90 Stunden, um das Zn₁₋ₓAlₓO-Kolloid zu erhalten.

5. Das Herstellverfahren des Yttriumoxid-Leuchtstoffs nach Anspruch 4, wobei
das Zinksalz mindestens ein aus der Gruppe bestehend aus Zn(CH₃COO)₂·2H₂O, Zn(NO₃)₂·6H₂O, ZnCl₂·2H₂O und ZnSO₄·7H₂O ausgewähltes Salz ist,
das Aluminiumsalz mindestens ein aus der Gruppe bestehend aus Al(NO₃)₃·9H₂O, AlCl₃·6H₂O und Al₂(SO₄)₃ ausgewähltes Salz ist,
das Lösungsmittel mindestens ein aus der Gruppe bestehend aus C₃H₈O₂ und einer wässrigen Ethanollösung ausgewähltes Lösungsmittel ist, und das Volumenverhältnis von Ethanol zu entionisiertem Wasser der wässrigen Ethanollösung im Bereich von 3:1 bis 7:1 liegt, und
das Stabilisierungsmittel mindestens ein aus der Gruppe bestehend aus C₂H₇NO, C₄H₁₁NO₂ und C₆H₁₅O₃N ausgewähltes Stabilisierungsmittel ist.

6. Das Herstellverfahren des Yttriumoxid-Leuchtstoffs nach Anspruch 3, wobei Schritt S2 aufweist:
S21: Abwiegen von Rohmaterialien von Y und Re gemäß einer Dotierungskonzentration von Re in Y₂O₃ von 0,1 % bis 10 % zum Herstellen einer Y,Re-Lösung mit einer Gesamt-Ionenkonzentration von 0,1 Mol/I bis 2,00 Mol/I, wobei die Y,Re-Lösung eine wässrige Y,Re-Lösung oder eine wässrige Ethanollösung ist;
S22: Abmessen der Y,Re-Lösung, aufeinanderfolgendes Zugeben von Ethanol, Rohmaterial von M, eines Komplexbildners und eines Tensids, um eine wässrige Y,Re-Alkohollösung herzustellen, wobei das Verhältnis von Wasser zu Alkohol in der wässrigen Y,Re-Alkohollösung im Bereich von 1:1 bis 9:1 liegt, die Summe der Molkonzentrationen von Y und Re im Bereich von 0,1 Mol/I bis 1,0 Mol/I liegt, das Molverhältnis des Komplexbildners zur Summe von Y und Re im Bereich von 1:1 bis 5:1 liegt, und die Konzentration des Tensids im Bereich von 0,05 Mol/I bis 0,20 Mol/I liegt, wobei entionisiertes Wasser hinzugefügt werden kann, um die wässrige Y,Re-Alkohollösung herzustellen; und
S23: Rühren der wässrigen Y,Re-Alkohollösung für 4 bis 6 Stunden in einem Wasserbad von 40°C bis 60°C und Platzieren der wässrigen Y,Re-Alkohollösung in einem Ofen bei 60°C bis 90°C und Altern für 40 bis 60 Stunden, um das Y,Re-Kolloid zu erhalten, das M-Metall-Nanopartikel oder Ionen M enthält.

7. Das Herstellverfahren des Yttriumoxid-Leuchtstoffs nach Anspruch 6, wobei
die Rohmaterialien von Y und Re Metalloxide, Chlorwasserstoffsäuresalze, Nitrate oder Oxalate sind,
das Rohmaterial von M Ag, Au, Pt und Pd in der Form von Nanopartikeln ist,
das Rohmaterial von M eine wässrige oder Alkohollösung von AgNO₃, HAuCl₄, H₂PtCl₆, H₂PdCl₄ ist,
der Komplexbildner Zitronensäure ist, und
das Tensid mindestens ein aus der Gruppe bestehend aus Polyethylenglykol 6000, Polyethylenglykol 8000, Polyethylenglykol 10000 und Polyethylenglykol 20000 ausgewähltes Tensid ist.

8. Das Herstellverfahren des Yttriumoxid-Leuchtstoffs nach Anspruch 7, wobei
die Metalloxide Y₂O₃, Eu₂O₃, Tb₄O₇ sind,
die Chlorwasserstoffsäuresalze YCl₃·7H₂O, EuCl₃, TbCl₃·6H₂O sind,
die Nitrate Y(NO₃)₃·6H₂O, Eu(NO₃)₃·6H₂O, Tb(NO₃)₃·6H₂O sind.

9. Das Herstellverfahren des Yttriumoxid-Leuchtstoffs nach Anspruch 7, wobei während der Herstellung der wässrigen Y,Re-Lösung,
wenn die Chlorwasserstoffsäuresalze oder die Nitrate als die Rohmaterialien von Y und/oder Re verwendet werden, die Rohmaterialien von Y und/oder Re direkt in einem Gefäß gelöst werden,
wenn die Metalloxide oder die Oxalate als die Rohmaterialien von Y und/oder Re verwendet werden, die entsprechen Y,Re Metalloxide oder Oxalate mit Chlorwasserstoffsäure oder Salpetersäure bei 15°C bis 100°C unter Rühren in einem Gefäß gelöst werden.

10. Das Herstellverfahren des Yttriumoxid-Leuchtstoffs nach Anspruch 3, wobei in Schritt S3
das Verhältnis der Summe der Molmenge von Zn und Al zur Summe der Molmenge von Re und Y im Mischkolloid im Bereich von 0,01:1 bis 2:1 liegt,
die Temperatur des Wasserbades 15°C bis 80°C und die Rührzeit 1 bis 4 Stunden beträgt,
das Mischkolloid für die Alterung für 48 bis 96 Stunden in einem Ofen bei 100°C bis 200°C platziert wird, und
das Mischkolloid zur Wärmebehandlung für 0,5 bis 6 Stunden unter einer Luftatmosphäre oder einer reduzierenden Atmosphäre in einem Tiegel bei 800°C bis 1300°C platziert wird.

## Revendications

1. Luminophore d'oxyde d'yttrium, consistant en :
un luminophore de Y₂O₃:Re dopé avec des nanoparticules de M et du Zn₁₋ₓAlₓO;
dans lequel Re est au moins un élément choisi parmi Eu et Tb, M est au moins un élément choisi dans le groupe constitué par Ag, Au, Pt et Pd sous la forme de nanoparticules, et 0<x≤0,05.

2. Luminophore d'oxyde d'yttrium selon la revendication 1, dans lequel la concentration de dopage de Re dans Y₂O₃ est de 0,1% à 10% ;
le rapport molaire de M à la somme de Re et Y est de 0,00002:1 à 0,01:1 ;
le rapport molaire de Zn₁₋ₓAlₓO à la somme de Re et Y est de 0,01:1 à 2:1.

3. Procédé de préparation de nanoparticules métallique ajoutée à un luminophore d'oxyde d'yttrium dopé aux terres rares, comprenant les étapes suivantes :
S1, la préparation d'un colloïde de Zn₁₋ₓAlₓO, dans lequel 0<x≤0,05 ;
S2, la préparation d'un colloïde de Y, Re contenant des nanoparticules métalliques M ou des ions M, dans lequel Re est au moins un élément choisi parmi Eu et Tb, M est au moins un élément choisi dans le groupe constitué par Ag, Au, Pt et Pd ; et
S3, le mélange du colloïde de Zn₁₋ₓAlₓO avec le colloïde de Y, Re contenant M dans un bain d'eau sous agitation pour produire un mélange colloïdal, le vieillissement et le traitement thermique du mélange colloïdal pour obtenir le luminophore d'oxyde d'yttrium.

4. Procédé de préparation du luminophore d'oxyde d'yttrium selon la revendication 3, dans lequel l'étape S1 comprend : le pesage de matières premières de sel de zinc et de sel d'aluminium, respectivement ; la dissolution avec un solvant ; l'ajout d'un agent stabilisant pour préparer une solution mixte ayant une concentration molaire totale d'ions zinc et d'ions d'aluminium de 0,05 à 0,70 mol/L ; l'agitation de la solution mixte dans un bain d'eau à 40°C à 70°C pendant 4 à 8 heures pour obtenir une solution de précurseur de Zn₁₋ₓAlₓO ; le placement de la solution de précurseur de Zn₁₋ₓAlₓO dans un four à 50°C à 70°C et le vieillissement pendant 56 à 90 heures pour obtenir le colloïde de Zn₁₋ₓAlₓO.

5. Procédé de préparation du luminophore d'oxyde d'yttrium selon la revendication 4, dans lequel le sel de zinc est choisi parmi au moins un membre du groupe constitué par Zn(CH₃COO)₂ · 2H₂O, Zn(NO₃)₂ · 6H₂O, ZnCl₂ · 2H₂O et ZnO₄ · 7H₂O ;
le sel d'aluminium est choisi parmi au moins un membre du groupe constitué par Al(NO₃)₃ · 9H₂O, AlCl₃ · 6H₂O et Al₂(SO₄)₃ ;
le solvant est choisi parmi au moins un membre du groupe constitué par C₃H₈O₂ et une solution d'éthanol aqueuse ; et le rapport en volume d'éthanol à l'eau déminéralisée de la solution d'éthanol aqueuse est dans une plage de 3:1 à 7:1 ; et
l'agent stabilisant est choisi parmi au moins un membre du groupe constitué par C₂H₇NO, C₄H₁₁NO₂ et C₆H₁₅O₃N.

6. Procédé de préparation du luminophore d'oxyde d'yttrium selon la revendication 3, dans lequel l'étape S2 comprend :
S21, le pesage de matières premières de Y et Re respectivement selon une concentration de dopage de Re dans Y₂O₃ de 0,1% à 10% pour la préparation d'une solution de Y, Re ayant une concentration d'ions collective de 0,1 mol/L à 2,00 mol/L ; dans lequel la solution de Y, Re est une solution d'éthanol aqueuse ou une solution aqueuse de Y, Re ;
S22, la mesure de la solution de Y, Re, l'ajout d'éthanol, de matières premières de M, d'un agent complexant et d'un agent tensio-actif, successivement, pour la préparation d'une solution aqueuse alcoolique de Y, Re ; dans lequel le rapport de l'eau à l'alcool dans la solution aqueuse alcoolique de Y, Re est de 1:1 à 9:1, la somme de la concentration molaire de Y et Re est de 0,1 mol/L à 1,0 mol/L, le rapport molaire de l'agent complexant à la somme de Y et Re est de 1:1 à 5:1, la concentration de l'agent tensio-actif est de 0,05 mol/L à 0,20 mol/L; dans lequel de l'eau déminéralisée peut être ajoutée pour préparer la solution aqueuse alcoolique de Y, Re ; et
S23, l'agitation de la solution aqueuse alcoolique de Y, Re dans un bain d'eau à 40°C à 60°C pendant 4 à 6 heures, et le placement de la solution aqueuse alcoolique de Y, Re dans un four à 60°C à 90°C et le vieillissement de 40 à 60 heures pour obtenir le colloïde de Y, Re contenant des nanoparticules métalliques de M ou des ions M.

7. Procédé de préparation du luminophore d'oxyde d'yttrium selon la revendication 6, dans lequel les matières premières de Y et Re sont des oxydes métalliques, des sels d'acide chlorhydrique, des nitrates, ou des oxalates ;
la matière première de M est Ag, Au, Pt et Pd sous la forme de nanoparticules ;
la matière première de M est une solution aqueuse ou alcoolique de AgNO₃, HAuCl₄, H₂PtCl₆, H₂PdCl₄ ;
l'agent complexant est l'acide citrique ; et
l'agent tensio-actif est choisi parmi au moins un membre du groupe constitué par le polyéthylène glycol 6000, le polyéthylène glycol 8000, le polyéthylène glycol 10000 et le polyéthylène glycol 20000.

8. Procédé de préparation du luminophore d'oxyde d'yttrium selon la revendication 7, dans lequel les oxydes métalliques sont Y₂O₃, Eu₂O₃, Tb₄O₇;
les sels d'acide chlorhydrique sont YCl₃ · 7H₂O, EuCl₃, TbCl₃ · 6H₂O ;
les nitrates sont Y(NO₃)₃ · 6H₂O, Eu(NO₃)₃ · 6H₂O, Tb(NO₃)₃ · 6H₂O.

9. Procédé de préparation du luminophore d'oxyde d'yttrium selon la revendication 7, dans lequel lors de la préparation de la solution aqueuse de Y, Re, si les sels de l'acide chlorhydrique ou les nitrates sont utilisés en tant que matières premières de Y et/ou Re, les premières matières de Y et/ou Re sont dissous dans un récipient directement ;
Si les oxydes métalliques ou les oxalates sont utilisés comme matières premières de Y et/ou Re, les oxydes métalliques ou les oxalates correspondant à Y, Re sont dissous dans un récipient avec de l'acide chlorhydrique ou de l'acide nitrique sous une condition de 15°C à 100°C avec agitation.

10. Le procédé de préparation du luminophore d'oxyde d'yttrium selon la revendication 3, dans lequel dans l'étape S3, le rapport de la somme d'une quantité molaire de Zn et Al à la somme d'une quantité molaire de Re et Y dans le mélange colloïdal se situe dans une plage de 0,01:1 à 2:1 ;
la température du bain d'eau est de 15°C à 80°C, le temps d'agitation est de 1 à 4 heures ;
le vieillissement est le placement du mélange colloïdal dans un four à 100°C à 200°C pendant 48 à 96 heures ; et le traitement thermique est le placement du mélange colloïdal dans un creuset à 800°C à 1300°C pendant 0,5 à 6 heures sous une atmosphère d'air ou dans une atmosphère réductrice.
